# EUROPÄISCHE PATENTANMELDUNG

(11) **EP 2 826 797 A1**
(43) Veröffentlichungstag der Anmeldung: **21.01.2015**
(21) Anmeldenummer: 13177038.0
(22) Anmeldetag: 18.07.2013
(51) Int. Cl.: C08G 59/18, C04B 26/14, C04B 24/12, C04B 111/00

(54) **Härterkomponente, diese enthaltende Mörtelmasse und deren Verwendung**

(71) Anmelder: HILTI Aktiengesellschaft, 9494 Schaan (LI)
(72) Erfinder: Pfeil, Armin, 86916 Kaufering (DE); Thiemann, Frank, 86899 Landsberg/Lech (DE)
(74) Vertreter: Hilti Aktiengesellschaft Corporate Intellectual Property

(57) **Zusammenfassung**

Es wird die Verwendung einer Verbindung der Formel R¹-Phenyl-(R²)ₐ, in der R¹ Wasserstoff oder C₁-C₁₂-Alkyl bedeutet, R² -O-CH₂-CHOH-CH₂-NH-CH₂-Phenyl-CH₂-NH₂ bedeutet und a 1, 2 oder 3 ist, als Härtungsmittel in Zusammensetzungen von Mörtel, Beton oder Kunststein, enthaltend organische Bindemittel auf Epoxid-Basis, eine dieses Härtungsmittel enthaltende Härterkomponente sowie eine diese umfassende Reaktionsharz-Mörtelmasse, insbesondere Mehrkomponenten-Mörtelmasse beschrieben.

## Beschreibung

Die vorliegende Erfindung betrifft eine Härterkomponente für eine Zusammensetzung von Mörtel, Beton oder Kunststein mit einem organischen Bindemittel auf Epoxidbasis, eine diese Härterkomponente enthaltende Mörtelmasse, insbesondere Mehrkomponenten-Mörtelmasse auf Epoxidbasis sowie deren Verwendung zur chemischen Befestigung, insbesondere zur Verankerung von Konstruktionselementen in Bohrlöchern in verschiedenen Untergründen, wie (Stahl)beton, Mauerwerk, Metallen (z.B. Stahl), Keramiken, Kunststoffen, Glas und Holz.

Organische, härtbare Zweikomponenten-Mörtelmassen auf der Grundlage von härtbaren Epoxidharzen und Aminhärtern sind seit langem bekannt und werden als Klebstoffe, Spachtelmassen zur Rissverfüllung und unter anderem zur Befestigung von Konstruktionselementen, wie Ankerstangen, Betoneisen (Bewehrungseisen), Schrauben und dergleichen, in Bohrlöchern verwendet. Derartige Mörtelmassen sind beispielsweise aus der EP 1 475 412 A2, der DE 198 32 669 A1 und der DE 10 2004 008 464 A1 bekannt. Die Mörtelmassen, welche in der chemischen Befestigungstechnik Verwendung finden sollen, sind komplexe Systeme, an die besondere Anforderungen gestellt werden, wie beispielsweise die Viskosität der Mörtelmasse, die Aushärtung und Durchhärtung in einem relativ breiten Temperaturbereich, gewöhnlich -10°C bis +40°C, die Eigenfestigkeit der ausgehärteten Masse, Haftung auf unterschiedlichen Untergründen und Umgebungsbedingungen, Lastwerte, Kriechfestigkeit und dergleichen.

Ein Nachteil der bekannten Mörtelmassen auf Epoxidbasis liegt im Einsatz von oft erheblichen Mengen an ätzenden Aminen als Härter, wie Xylylendiamin (XDA), insbesondere das m-Xylylendiamin (mXDA; 1,3-Benzoldimethanamin), und/oder an aromatischen Alkoholverbindungen, wie freie Phenole, z.B. Bisphenol A, was ein Gesundheitsrisiko für den Anwender bedeuten kann. Diese Verbindungen sind in zum Teil recht erheblichen Mengen, d.h. bis zu 50% in den jeweiligen Komponenten von Mehrkomponenten-Mörtelmassen enthalten, so dass vielfach eine Kennzeichnungspflicht der Verpackung besteht, die zu einer geringeren Anwenderakzeptanz des Produkts führt. In den letzten Jahren wurden in einigen Ländern Grenzwerte eingeführt, bis zu welchem Gehalt beispielsweise mXDA oder Bisphenol A in den Produkten enthalten sein dürfen, wobei diese dann gekennzeichnet werden müssen. In anderen Ländern dürfen die Verbindungen gar nicht mehr verwendet werden.

Die Aufgabe der Erfindung besteht daher darin, eine Reaktionsharz-Mörtelmasse bereitzustellen, bei der der Anteil an kennzeichnungspflichtigen Verbindungen soweit wie möglich reduziert werden kann, ohne auf die vorteilhaften Eigenschaften der kennzeichnungspflichtigen Verbindungen verzichten zu müssen.

Es wurde überraschend gefunden, dass die Verwendung von Addukten aus Glycidylethern mit araliphatischen Polyaminen, wie sie in der DE 10 2009 027 329 A1 beschrieben sind, als Härtungsmittel zu einer Reaktionsharz-Mörtelmasse mit ausgezeichneten Eigenschaften führt und darüber hinaus einen deutlich geringeren Anteil an kennzeichnungspflichtigen Verbindungen, wie z.B. mXDA oder Bisphenol A erlaubt.

Ein weiterer Vorteil der Erfindung liegt darin, dass auf den Einsatz von freien Phenolen, welche üblicherweise den Mannichbasen-gehärteten Systemen als Beschleuniger zugegeben werden, ganz verzichtet werden kann, wodurch eine Reaktionsharz-Mörtelmasse bereitgestellt werden kann, welche weniger gesundheitsgefährdende Inhaltsstoffe aufweist.

Wie eingangs erwähnt, sind Reaktionsharz-Mörtelmassen komplexe Systeme, wobei es nicht möglich ist, den Einfluss der anorganischen Zuschlagstoffe sowie die Eigenschaften, wie Aushärtung, Durchhärtung, Haftung auf unterschiedlichen Untergründung und Umgebungsbedingungen, Lastwerte, Kriechfestigkeit und dergleichen, vorherzusagen. Die mit der in der DE 10 2009 027 329 A1 als Härtungsmittel beschriebenen Verbindungsklasse erzielbare Wirkung war nicht vorhersehbar, da der Einfluss des Härters auf die für chemische Befestigungszwecke erforderlichen hohen Anforderungen an die Eigenschaften der Reaktionsharz-Mörtelmassen sowohl im ungehärteten wie auch im ausgehärteten Zustand weder bekannt noch empirisch berechenbar sind. Zudem werden an die Eigenschaften von Beschichtungssystemen andere Anforderungen gestellt als an Reaktionsharz-Mörtelmassen für die chemische Verankerung von Befestigungselementen in Bohrlöchern. Die Ergebnisse sind daher nicht ohne weiteres auf die Systeme der vorliegenden Erfindung übertragbar.

Ein Gegenstand der Erfindung ist daher die Verwendung einer Verbindung der Formel (I) 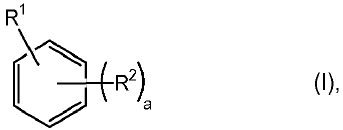 in der
- R¹: Wasserstoff oder die Gruppe C₁-C₁₂-Alkyl, bevorzugt C₁-C₉-Alkyl und stärker bevorzugt C₁-C₆-Alkyl darstellt,
- R²: die Gruppe O-CH₂-CHOH-CH₂-R³ darstellt,
- a: 1, 2 oder 3, bevorzugt 2 oder 3, ist und
- R³: die Gruppe 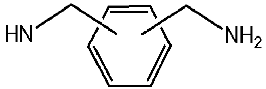
darstellt,
als Härtungsmittel in Zusammensetzungen von Mörtel, Beton oder Kunststein mit einem organischen Bindemittel auf Epoxidbasis.

Diese Verbindungen können beispielsweise aus aromatischen Glycidylethern, wie Verbindungen mit zwei oder drei Epoxidgruppen, die mit einem Überschuss an Diaminoalkylbenzol umgesetzt werden, hergestellt werden. Als Verbindungen mit zwei oder drei Epoxidgruppen mit aromatischen Kernen sind insbesondere die Umsetzungsprodukte von Phenol und Polyhydroxybenzolen, wie Catechol, Resorcinol, Hydrochinon, Pyrogallol, Hydroxyhydrochinon, Phloroglucin, 2,3-, 2,4-, 2,5-, 2,6-, 3,4-, oder 3,5-Dihydroxytoluol, gegebenenfalls auch 1,3-, 1,5- oder 1,6-Dinaphthol, insbesondere Catechol, Resorcinol, Hydrochinon, Pyrogallol, Phloroglucin oder Hydroxyhydrochinon, sowie deren Alkylderivate geeignet. Diese können mit beispielsweise Epichlorhydrin oder analogen Verbindungen zu Di- oder Tri-Epoxid substituierten Verbindungen umgesetzt werden. Als aromatisches Diamin zur weiteren Umsetzung ist insbesondere das XDA als Aminkomponente geeignet, bevorzugt das mXDA.

Das Mengenverhältnis von Aminogruppen des Diamins, wie XDA, zu den Glycidylgruppen soll so gewählt werden, dass ein Überschuss von Aminogruppen vorhanden ist und alle Epoxidgruppen umgesetzt werden. Es entsteht also eine im Wesentlichen epoxidfreie Härterkomponente. In einer Ausführungsform beträgt das Epoxid/NH-Verhältnis 0,9:4 bis 1,1:4 (berechnet als H-acide NH-Gruppen). Gemäß einer anderen Ausführungsform wird die Menge der Epoxidgruppen zu der Menge der NH-Funktionalität so gewählt, dass ein Überschuss an nicht abreagiertem XDA vorliegt. In diesem Fall ist das Produkt ein Gemisch aus XDA und einer Verbindung der Formel (I). Dabei sollen die Ausgangsmaterialien so gewählt werden, dass höchstens 50 Gew.-%, bezogen auf die Härterkomponente, an nicht umgesetztem Diamin enthalten sind. Eine weitere Ausführungsform wählt die Mengenverhältnisse zur Herstellung der Härterkomponente so, dass dabei ein Molekulargewichtsaufbau eintritt. Dabei kann das Epoxid/NH-Verhältnis beispielsweise von 1,1:4 bis 1,6:4 betragen.

Die Umsetzung zur Herstellung erfindungsgemäß geeigneter Härtungsmittel ist bekannt. Dazu werden die geeigneten di- oder trifunktionellen Epoxidverbindungen zusammen mit der entsprechenden Menge des XDA, insbesondere mXDA, gemischt und ggf. unter leichtem Erwärmen umgesetzt. Das kann gegebenenfalls auch in Lösemitteln durchgeführt werden. Diese kann man nach der Reaktion bei Bedarf durch Destillation entfernen. Auch überschüssiges XDA kann entsprechend entfernt werden. Zur Einstellung eines geeigneten Aminwasserstoff-Äquivalents kann, gegebenenfalls nach dem Abtrennen des XDA, mit geeigneten anderen, weniger kritischen Aminen entsprechend eingestellt werden. Das "Aminwasserstoff-Äquivalentgewicht" oder "(Amin-)H-Aktiv-Äquivalentgewicht" (abgekürzt "HAV-Wert") oder auch "Aminwasserstoff-Äquivalent", abgekürzt "HAV", ist definiert als der Quotient der (zahlenmittleren) molaren Masse des betreffenden Amins und der mittleren Anzahl der Aminwasserstoff-Atome pro Molekül. Die üblicherweise verwendete Einheit ist "g/val".

Die erfindungsgemäß als Härtungsmittel geeigneten Verbindungen weisen primäre Aminogruppen auf. Weiterhin enthalten sie sekundäre Aminogruppen sowie zusätzlich OH-Gruppen. Das Molekulargewicht dieser Verbindungen kann zwischen ca. 450 bis 2500 g/mol betragen, insbesondere bis ca. 1500 g/mol.

In diesem Zusammenhang wird Bezug genommen auf die Anmeldung DE 10 2009 027 329 A1, deren Inhalt hiermit in diese Anmeldung aufgenommen wird.

Durch Verwendung der Verbindung der Formel (I) ist es möglich, Härterkomponenten für Zusammensetzungen von Mörtel, Beton oder Kunststein bereitzustellen, deren Gehalt an toxischem 1,3-Benzoldimethanamin (mXDA) möglichst gering gehalten werden kann. Ferner kann die Gesamtviskosität einer entsprechenden Härterkomponente durch entsprechende Wahl an Lösungsmittel für die Herstellung der Verbindung der Formel (I) voreingestellt bzw. eingestellt werden.

Dementsprechend ist ein weiterer Gegenstand der Erfindung eine Härterkomponente für Zusammensetzungen von Mörtel, Beton oder Kunststein mit einem organischen Bindemittel auf Epoxidbasis. Die Härterkomponente enthält erfindungsgemäß eine Verbindung der Formel (I) 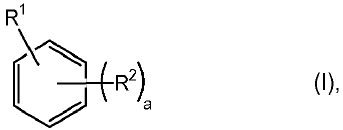 in der
- R¹: Wasserstoff oder die Gruppe C₁-C₁₂-Alkyl, bevorzugt C₁-C₉-Alkyl und stärker bevorzugt C₁-C₆-Alkyl darstellt,
- R²: die Gruppe O-CH₂-CHOH-CH₂-R³ darstellt,
- a: 1, 2 oder 3, bevorzugt 2 oder 3 ist und
- R³: die Gruppe 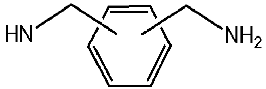
darstellt,
wie sie bereits oben näher erläutert wurde. In diesem Zusammenhang wird auf die obigen Ausführungen dazu verwiesen. Es können auch Gemische dieser Verbindungen als Härtungsmittel verwendet werden.

Das Härtungsmittel ist bevorzugt in einer Menge von 1 bis 50 Gew.-% in der Härterkomponente enthalten, bezogen auf das Gesamtgewicht der Härterkomponente. Daneben können weiteren Amine, zweckmäßig Polyamine, wie das XDA, insbesondere mXDA, enthalten sein. Deren Menge kann bis zu 50 Gew.-% betragen, bezogen auf das Gesamtgewicht der Härterkomponente.

Neben dem Härtungsmittel enthält die Härterkomponente erfindungsgemäß ferner anorganische Zuschlagstoffe, die unter Füllstoffen, weiteren Zusätzen und gegebenenfalls organischen und/oder anorganischen Additiven ausgewählt.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Russ, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden. Bevorzugt und deutlicher verstärkend wirken sich jedoch die globulären, inerten Stoffe (Kugelform) aus.

Der Anteil der Füllstoffe beträgt 0 bis 70 Gew.-%, vorzugsweise 5 bis 55 Gew.-%, bezogen auf die Härterkomponente.

Weitere mögliche organische bzw. anorganische Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Di-niederalkyl-niederalkanoylamide, wie Dimethylacetamid, Niederalkylbenzole, wie Xylole oder Toluol, Phthalsäureester oder Paraffine, oder Wasser.

In dieser Hinsicht wird Bezug genommen auf die Veröffentlichungen DE 101 15 591 A1 und DE 101 15 587 A1, deren Inhalt hiermit in diese Anmeldung aufgenommen wird.

Bevorzugt enthält die Härterkomponente ferner einen Beschleuniger. Geeignete Beschleuniger sind Aminophenole oder Ether davon, die mindestens eine tertiäre Aminogruppe gegebenenfalls zusammen mit einer primären und/oder sekundären Aminogruppe aufweisen. Der Beschleuniger ist bevorzugt unter Verbindungen der allgemeinen Formel (II) ausgewählt, 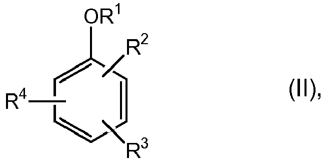 in der R¹ Wasserstoff oder ein unverzweigtes oder verzweigtes C₁-C₁₅-Alkylradikal darstellt, R² ein (CH₂)ₙNR⁵R⁶-Radikal oder ein NH(CH₂)ₙNR⁵R⁶-Radikal darstellt, in dem R⁵ und R⁶ unabhängig voneinander ein unverzweigtes oder verzweigtes C₁-C₁₅-Alkylradikal darstellen und n 0 oder 1 ist, R³ und R⁴ unabhängig voneinander Wasserstoff oder ein (CH₂)ₙNR⁷R⁸-Radikal oder ein NH(CH₂)ₙNR⁷R⁸-Radikal darstellen, R⁷ und R⁸ unabhängig voneinander Wasserstoff oder ein unverzweigtes oder verzweigtes C₁-C₁₅-Alkylradikal darstellen und n 0 oder 1 ist. R¹ ist bevorzugt Wasserstoff oder stellt ein C₁-C₁₅-Alkylradikal dar, insbesondere ein unverzweigtes C₁-C₁₅-Alkylradikal, stärker bevorzugt Methyl oder Ethyl und am stärksten bevorzugt Methyl. Bevorzugt ist das Phenol der Formel (II) in 2-, 4- und 6-Position substituiert, d.h. die Substituenten R², R³ und R⁴ sitzen in 2-, 4- und 6-Position. Für den Fall, dass R⁵, R⁶, R⁷ und R⁸ Alkylradikale darstellen, sind diese bevorzugt ein C₁-C₅-Alkylradikal, stärker bevorzugt ein Methyl- oder Ethylradikal und am stärksten bevorzugt das Methylradikal. Bevorzugt ist der Beschleuniger unter 2,4,6-Tris(dimethylaminomethyl)phenol, Bis(dimethylaminomethyl)phenol und 2,4,6-Tris(dimethylamino)phenol ausgewählt.

Als Beschleuniger kann entweder eine Verbindung oder ein Gemisch von mindestens zwei Verbindungen der Formel (II) eingesetzt werden.

Der Beschleuniger wird bevorzugt in einer Menge von 0,1 bis 10 Gew.-%, bezogen auf die Härterkomponente, eingesetzt.

Die organische und/oder organischen Additive können in Summe in einer Menge von 0,1 bis 10 Gew.-% in der Härterkomponente enthalten sein, bezogen auf das Gesamtgewicht der Härterkomponente.

Weiter bevorzugt kann die Härterkomponente ferner einen Haftvermittler enthalten. Durch den Einsatz eines Haftvermittlers wird der Verbund zwischen Bohrlochwand und Mörtelmasse verbessert, so dass sich die Haftung im ausgehärteten Zustand erhöht. Dies ist für die Verwendung der Zweikomponenten-Mörtelmasse z.B. in Diamantgebohrten Bohrlöchern von Bedeutung und erhöht die Lastwerte. Geeignete Haftvermittler, die in der Härterkomponente enthalten sein können, sind aus der Gruppe der Silane, die mindestens eine hydrolysierbare organische Gruppe aufweist und die ferner mit wenigstes einer weiteren reaktiven organischen Gruppe funktionalisiert sind, die mit Epoxidgruppen reagieren können, ausgewählt, wie N-2-(Aminoethyl)-3-aminopropylmethyldiethoxysilan, N-2-(Aminoethyl)-3-aminopropyltri-ethoxysilan, 3-Aminopropyltrimethoxysilan, 3-Aminopropyltriethoxysilan, N-Phenyl-3-aminoethyl-3-aminopropyltrimethoxysilan, 3-Mercaptopropyltrimethoxysilan und 3-Mercaptopropylmethyldimethoxysilan. In diesem Zusammenhang wird auf die WO 2011/113533 A1 verwiesen, deren Inhalt hiermit in diese Anmeldung aufgenommen wird.

Die beschriebenen Härterkomponenten eigenen sich insbesondere als Härterkomponenten in mehrkomponentigen Mörtelmassen, insbesondere anorganisch gefüllten Mörtelmassen.

Ein weiterer Gegenstand der Erfindung ist daher eine Mehrkomponenten-Mörtelmasse mit einer Harzkomponente, die mindestens ein Epoxidharz, das im Durchschnitt mehr als eine Epoxidgruppe pro Molekül enthält, umfasst, und einer eben beschriebenen Härterkomponente.

Als Epoxidharz kommt eine Vielzahl der hierfür dem Fachmann bekannten und kommerziell erhältlichen Verbindungen in Betracht, die im Mittel mehr als eine Epoxidgruppe, vorzugsweise zwei Epoxidgruppen, pro Molekül enthalten. Diese Epoxid-Verbindungen (Epoxidharze) können dabei sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet, Geeignete Polyepoxid-Verbindungen sind z.B. in Lee, Neville, Handbook of Epoxy Resins 1967, beschrieben. Vorzugsweise handelt es sich bei den Epoxiden um Glycidylether, die sich von mehrwertigen Alkoholen, insbesondere Bisphenolen und Novolaken ableiten. Die Epoxidharze haben ein Epoxyäquivalentgewicht von 120 bis 2000 g/EQ, vorzugsweise von 140 bis 400. Es können auch Mischungen von mehreren Epoxidharzen verwendet werden. Besonders bevorzugt werden flüssige Diglycidylether auf Basis von Bisphenol A und/oder F mit einem Epoxyäquivalentgewicht von 180 bis 190 g/EQ. Es können auch Mischungen mehrerer Epoxidharze verwendet werden. Bevorzugt ist das Epoxid ein Diglycidylether von Bisphenol A oder von Bisphenol F oder einem Gemisch davon. In diesem Zusammenhang entspricht der "*Epoxidwert"* der Anzahl der Mole der Epoxidgruppen in 100g Harz (im Folgenden auch als nEP bezeichnet). Das Epoxyäquivalentgewicht (EEW) berechnet sich daraus und entspricht dem Kehrwert aus dem Epoxidwert. Die üblicherweise verwendete Einheit ist "g/val".

Als mehrwertige Phenole sind beispielsweise zu nennen: Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan, 4,4'-Dihydroxy-3,3'-dimethyldiphenylpropan und dergleichen.

Das Epoxidharz hat bevorzugt ein Molekulargewicht von mindestens 300 Dalton. Das Epoxidharz hat ein Molekulargewicht von höchstens 10.000 Dalton und bevorzugt höchstens 5.000 Dalton. Das Molekulargewicht des Epoxidharzes hängt dabei im Wesentlichen von der gewünschten Viskosität und Reaktivität der Reaktionsharz-Zusammensetzung und/oder von der zu erreichenden Vernetzungsdichte ab.

Erfindungsgemäß können auch Kombinationen unterschiedlicher Epoxidharze als Epoxidharz verwendet werden.

Der Anteil an Epoxidharz beträgt bis zu 100 Gew.-%, bevorzugt 10 bis 70 Gew.-% und besonders bevorzugt 30 bis 60 Gew.-%, bezogen auf die Harzkomponente.

Neben den Epoxidharzen kann die Harzkomponente der erfindungsgemäßen Reaktionsharz-Mörtelmasse mindestens einen Reaktivverdünner enthalten. Als Reaktivverdünner finden Glycidylether von aliphatischen, alicyclischen oder aromatischen Mono- oder insbesondere Polyalkoholen Verwendung, wie Monogylcidylether, z.B. o-Kresylglycidylether, und/oder insbesondere Glycidylether mit einer Epoxoid-Funktionalität von mindestens 2, wie 1,4-Butandioldiglycidylether (BDDGE), Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether (TMPTGE), oder ferner Mischungen von zwei oder mehr dieser Reaktivverdünner Verwendung, vorzugsweise Triglycidylether, besonders bevorzugt als Gemisch aus 1,4-Butandioldiglycidylether (BDDGE) und Trimethylolpropantriglycidylether (TMPTGE). Die Reaktivverdünner können in einer Menge von 0 bis 60 Gew.-%, insbesondere von 1 bis 20 Gew.-%, bezogen auf die Harzkomponente, in der Harzkomponente vorliegen.

Bevorzugt enthält die Harzkomponente ferner anorganische Zuschlagstoffe, wobei die Zuschlagstoffe dieselben sind, wie sie der Härterkomponente zugegeben werden können.

Analog der Härterkomponente kann die Harzkomponente anstelle oder zusätzlich zu der Härterkomponente einen Haftvermittler enthalten. Geeignete Haftvermittler, die in der Harzkomponente enthalten sein können, sind aus der Gruppe der Silane, die mindestens eine hydrolysierbare organische Gruppe enthalten und ferner mit wenigstens einer Epoxidgruppe funktionalisiert sind, ausgewählt, wie 3-Glycidoxypropyltrimethoxysilan, 3-Glycidoxypropyltriethoxysilan und 2-(3,4-Epoxycyclohexyl)ethyltrimethoxysilan.

Der Haftvermittler kann in einer Menge bis zu 10 Gew.-%, bevorzugt 0,1 bis 5 Gew.-%, bezogen auf die Harzkomponente, enthalten sein.

Die erfindungsgemäßen Reaktionsharz-Mörtelmassen können als Ein- oder vorzugsweise Mehrkomponentensysteme vorgesehen sein und auch verwendet werden oder direkt vor der Anwendung der Mörtelmasse gemischt werden.

Für die Anwendung als Einkomponentensystem müssen die miteinander reagierenden Komponenten, wie Harz und Härtungsmittel, reaktionsinhibierend (etwa eingekapselt) hergerichtet sein, um eine vorzeitige Aushärtung des Mörtelmasse vor deren Anwendung zu verhindern.

Für die Anwendung als Mehrkammervorrichtung, insbesondere Zweikammervorrichtung, sind die Harzkomponente von der Härterkomponente getrennt konfektioniert, so dass die eine Komponente regelmäßig das härtbare Epoxidharz und gegebenenfalls den Reaktivverdünner enthält, während die andere Komponente den Aminhärter und gegebenenfalls den Beschleuniger enthält. Die Füllstoffe können in der einen oder auch in der anderen Komponente enthalten sein, ebenso wie die anderen an sich bekannten üblichen Bestandteile.

Zu den Zweikammersystemen, in denen die erfindungsgemäße, härtbare Mehrkomponenten-Mörtelmasse bevorzugt vorliegt, zählen insbesondere zwei oder mehr Folienbeutel zur Trennung von härtbaren Bestandteilen und Härtern, wobei der Inhalt der Folienbeutel gemeinsam, beispielsweise über einen Statikmischer, in ein Bohrloch injiziert werden kann. Diese Patronen- und Folienbeutel-Systeme enthalten die Härterkomponente reaktionsinhibierend getrennt von der Harzkomponente. Aber auch die Konfektionierung in Mehrkammerpatronen oder -eimern oder Sets von Eimern ist möglich.

Ein weiterer Gegenstand der Erfindung ist die Verwendung der erfindungsgemäßen Mehrkomponenten-Mörtelmasse zur chemischen Befestigung, insbesondere zur Verankerung von Konstruktionselementen, insbesondere von Ankerstangen, Ankerbolzen, (Gewinde)stangen, Betoneisen, Schrauben, Glasfaser- und Kohlenstofffaserstangen und dergleichen, in Bohrlöchern in verschiedenen Untergründen, wie (Stahl)beton, Mauerwerk, Metallen (z.B. Stahl), Keramiken, Kunststoffen, Glas und Holz, sowie zur baulichen Instandsetzung, wie dem Verfüllen von Rissen, Hinterfüllen von Hohlräumen und dergleichen aber auch zum Verkleben von mineralischen Untergründen.

Es hat sich gezeigt, dass eine Mörtelmasse bereitgestellt werden kann, deren Eigenschaften an bereits bekannte und kommerziell erhältliche Systeme heranreicht und die es ermöglicht, auf die üblicherweise verwendet umwelt- und gesundheitsgefährdenden Inhaltsstoffe, wie freie Bisphenole oder hohe Anteile an mXDA, zu verzichten.

Die nachfolgenden Beispiele dienen der Illustration der Erfindung, ohne ihren Umfang einzuschränken:

### AUSFÜHRUNGSBEISPIELE

### Beispiele 1 und 2

Entsprechend der Zusammensetzung der nachfolgend genannten Komponenten werden durch Mischen der Harz- und Härterkomponente in einem Volumenverhältnis von 3:1 mittels eines Statikmischers (HILTI MD 2500) Mörtelmischungen hergestellt:

### Harzkomponente

| | | |
|---|---|---|
| Reaktivverdünntes Epoxidharz ¹⁾: | | 61 % |
| | - Bisphenol A Basisharz | |
| | - Bisphenol F Basisharz | |
| | - Trimethylolpropantriglycidylether | |
| | - 1,4-Hexandioldiglycidylether | |
| anorganischer Füllstoff: | | 36 % |
| | - Quarzmehl ²⁾ | |
| hydrophobierte pyrogene Kieselsäure | | 3 % |

| | | |
|---|---|---|
| ¹⁾ Gesamtviskosität: 500 bis 1200 mPas bei 23°C; EEW 160-180 g/val ²⁾ mittlere Korngröße: 16 µm | | |

### Härterkomponente

| | | |
|---|---|---|
| Härter: | | 62 Gew.-% |
| | - mXDA-Diglycidylether-Addukt | |
| anorganischer Füllstoff: | | |
| | - Zement ⁴⁾ | 14 Gew.-% |
| | - Quarzmehl ⁵⁾ | 20 Gew.-% |
| hydrophobierte pyrogene Kieselsäure | | 4 Gew.-% |

| | | |
|---|---|---|
| ³⁾ Viskosität bei 23°C: 150-300 mPa·s; HAV-Wert 50 g/val ⁴⁾ Secar® 80, Kerneos Inc. ⁵⁾ mittlere Korngröße: 16 µm | | |

### mXDA-Diglycidylether-Addukt

Die mXDA-Diglycidylether-Addukte der erfindungsgemäßen Beispiele 1 und 2 wurden gemäß DE 10 2009 027 329 A1 aus mXDA und Resorcindiglycidylether (Beispiel 1) und ortho-Kresyldiglycidylether (Beispiel 2) erhalten und mit einem Überschuss mXDA auf einen HAV-Wert von 50 g/val eingestellt.

### Vergleichsbeispiel V1

Als Vergleich diente eine Zusammensetzung entsprechend der Beispiele 1 und 2, mit dem Unterschied, dass statt des m-XDA-Diglycidylether-Addukts und dem mXDA ein Härter verwendet wurde, der gemäß der EP 1 674 495 A1 hergestellt wurde und etwa 25 Gew.-% eines Phenolharzes gemäß der WO 99/29757 A1 und etwa 36 Gew.-% eines Gemisches aus 2-Methyl-1,5-pentanediamin und mXDA enthält.

Alle Komponenten der Harz- und der Härterkomponente wurden jeweils im 1 L Kunststoffbecher per Hand vorgemischt und anschließend für 15 Minuten im Planetenmischer gemischt (450 U/min; < 100 mbar). Die Komponenten wurden anschließend in 3:1-Hartkartuschen abgefüllt.

### b) Gelzeitbestimmung

Die Bestimmung der Gelzeit der Mörtelmassen erfolgt mit einer handelsüblichen Vorrichtung (GELNORM®-Gel Timer) bei einer Temperatur von 25°C. Hierzu werden die A- und die B-Komponente im Volumenverhältnis 3:1 gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Wärmeentwicklung der Probe wird gegen die Zeit aufgetragen. Die Auswertung erfolgt gemäß DIN16945. Die Gelzeit ist die Zeit, bei der ein Temperaturanstieg um 10K erreicht wird, hier von 25°C nach 35°C.

Die Ergebnisse sind in Tabelle 1 aufgeführt.

### c) Bestimmung der Lastwerte

Zur Bestimmung der Lastwerte der ausgehärteten Mörtelmassen wird eine Ankergewindestange HAS M12x72 verwendet, die in ein Bohrloch in Beton C20/25 mit einem Durchmesser von 14 mm und einer Bohrlochtiefe von 72 mm mit der erfindungsgemässen Zweikomponenten-Mörtelmasse bei +5°C bzw. +23°C eingedübelt wird. Die mittlere Versagenslast wird durch zentrisches Ausziehen der Ankergewindestange mit enger Abstützung unter Verwendung hochfester Ankergewindestangen ermittelt. Es werden jeweils 3 Ankergewindestangen eingedübelt und nach 24 Stunden Aushärtung ihre Lastwerte bestimmt. Die hierbei ermittelten Lastwerte (Verbundspannung; Versuchsdurchführung: entsprechend der Erfordernisse nach ETAG001) sind als Mittelwert in der nachfolgenden Tabelle 1 aufgeführt.

**Tabelle 1: Gelzeit und Verbundspannung verschiedener Mörtelzusammensetzungen**

| | **Beispiele** | | |
|---|---|---|---|
| | **V1** | **1** | **2** |
| Gelzeit bei 25°C (min) | ∼ 25 ¹⁾ | ∼ 30 | ∼ 10 |
| Gelzeit bei 40°C (min) | ∼ 6 | ∼ 7 | ∼ 8 |
| Verbundspannung τ (MPa) nach 24h (+25°C) | 34,10 | 36,88 | 38,69 |
| Verbundspannung τ (MPa) nach 24h (+5°C) | 29,70 | 19,56 | 13,96 |
| Verbundspannung τ (MPa) nach 24h (+40°C) | 34,10 | 39,35 | 36,70 |
| Verbundspannung τ (MPa) Inserv (+43°C) | 31,00 | 33,01 | 35,04 |

| | | | |
|---|---|---|---|
| ¹⁾ stetiger Anstieg der Temperatur | | | |

Es konnte gezeigt werden, dass die Gelzeiten im Bereich der Vergleichszusammensetzung liegen und die Eigenschaften, insbesondere die Reaktivitäten sowie die Lastwerte, der erfindungsgemäß hergestellten Zusammensetzungen vergleichbar mit den Vergleichszusammensetzungen sind.

Die erfindungsgemäßen Mörtelzusammensetzungen erreichten bei +23°C und +50°C Lastwerte, die im Bereich der Vergleichszusammensetzung liegen. Obwohl bei +5°C die Lastwerte niedriger sind als die der Vergleichszusammensetzung, wurden auch hier steile Kraft-Verschiebungskurven gefunden, was für eine gute Aushärtung und Bildung eines Polymers mit hohem E-Modul spricht.

Aus der Tabelle wird somit ersichtlich, dass die mXDA-Diglycidylether-Addukte prinzipiell sich als Aminhärter für Epoxy-Amin-Mörtelmassen eigenen.

## Patentansprüche

1. Verwendung einer Verbindung der Formel (I) 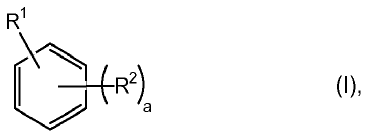 in der
R¹ Wasserstoff oder die Gruppe C₁-C₁₂-Alkyl darstellt,
R² die Gruppe O-CH₂-CHOH-CH₂-R³ darstellt,
a 1, 2 oder 3 ist und
R³ die Gruppe 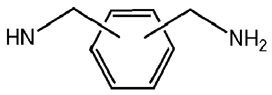
darstellt,
als Härtungsmittel in Zusammensetzungen von Mörtel, Beton oder Kunststein, mit einem organischen Bindemittel auf Epoxidbasis.

2. Verwendung nach Anspruch 1, wobei die Verbindung der Formel (I) ein Umsetzungsprodukt aus Xylylendiamin mit Glycidylethern basierend auf Phenol oder Polyhydroxybenzolen und deren Alkylderivaten ist.

3. Verwendung nach Anspruch 2, wobei die Polyhydroxybenzole unter Catechol, Resorcinol, Hydrochinon, Pyrogallol, Phloroglucin, Hydroxyhydrochinon und/oder deren Alkylderivaten ausgewählt ist.

4. Härterkomponente für Zusammensetzungen von Mörtel, Beton oder Kunststein mit einem organischen Bindemittel auf Epoxidbasis, die eine Verbindung der Formel (I) 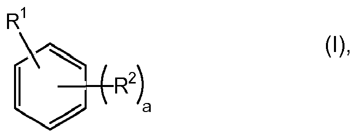 in der
R¹ Wasserstoff oder die Gruppe C₁-C₁₂-Alkyl darstellt,
R² die Gruppe O-CH₂-CHOH-CH₂-R³ darstellt,
a 1, 2 oder 3 ist und
R³ die Gruppe 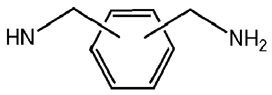
darstellt,
und anorganische Zuschlagstoffe enthält.

5. Härterkomponente nach Anspruch 4, die 1 bis 50 Gew.-% einer Verbindung der Formel (I) und 1 bis 70 Gew.-% anorganische Füllstoffe enthält, jeweils bezogen auf das Gesamtgewicht der Härterkomponente.

6. Härterkomponente nach Anspruch 4 oder 5, die ferner Beschleuniger und/oder Haftvermittler als organische Additive enthält, bezogen auf das Gesamtgewicht der Härterkomponente.

7. Härterkomponente nach Anspruch 6, wobei die organischen Additive in einer Menge von 0,1 bis 10 Gew.-% enthalten sind.

8. Reaktionsharz-Mörtelmasse, insbesondere Mehrkomponenten-Reaktionsharz-Mörtelmasse mit einer Harzkomponente, die mindestens ein Epoxidharz, das im Durchschnitt mehr als eine Epoxidgruppe pro Molekül enthält, umfasst, und einer Härterkomponente nach einem der Ansprüche 4 bis 7.

9. Reaktionsharz-Mörtelmasse nach Anspruch 8, wobei die härtbare Verbindung unter Polyglycidylethern von Novolak, Bisphenol A oder F, oder Gemischen solcher Epoxide ausgewählt ist.

10. Reaktionsharz-Mörtelmasse nach Anspruch 8 oder 9, wobei die Harzkomponente ferner mindestens einen Reaktivverdünner enthält.

11. Reaktionsharz-Mörtelmasse nach einem der Ansprüche 8 bis 10, wobei die Harzkomponente ferner mindestens einen anorganischen Zuschlagstoff enthält.

12. Verwendung einer Reaktionsharz-Mörtelmasse nach einem der Ansprüche 8 bis 11 zur chemischen Befestigung, insbesondere zur Verankerung von Befestigungselementen in Bohrlöchern.
